# EUROPEAN PATENT SPECIFICATION

(11) **EP 3 470 583 B1**
(45) Date of publication and mention of the grant of the patent: **12.04.2023**
(21) Application number: 18194563.5
(22) Date of filing: 14.09.2018
(51) Int. Cl.: E02F 9/08, E02F 9/16, B60R 21/13, B60N 2/38, B60R 16/023, B62D 49/00, B60R 11/00

(54) **TRACTOR**
TRAKTOR
TRACTEUR

(30) Priority: 10.10.2017 JP 2017197018
(43) Date of publication of application: 17.04.2019
(73) Proprietor: Kubota Corporation, Osaka-shi, Osaka 556-8601 (JP)
(72) Inventor: UEDA, Tatsuya, Sakai-city, Osaka 590-0823 (JP); TAMURA, Yoshiyuki, Sakai-city, Osaka 590-0823 (JP)
(74) Representative: Müller-Boré & Partner Patentanwälte PartG mbB

(56) References cited:
- JP-A- 2004 175 160
- JP-A- 2008 155 771
- JP-A- 2014 148 921
- JP-A- 2017 030 519
- JP-B2- 3 692 550
- JP-U- S57 168 459
- US-A1- 2017 167 112

## Description

### [Technical Field]

The present invention relates to an arrangement of a control unit on a tractor.

### [Background Art]

When disposing on a tractor a control unit for controlling each part, it is disposed below a driver's seat that is disposed in a driving unit, as disclosed in patent document 1.
JP 2014 175160 A discloses a seat of a tractor which can be raised up to a working state and laid down to a laid state laid toward the front of a machine frame. A rotary apparatus supported on the rear part of a travelling machine frame is controlled so as to ascend and descend by a hydraulic cylinder via a control unit.

### [Prior Art Document]

### [Patent Literature]

[Patent Document 1]
Japanese Unexamined Patent Application No. 2014-205367[Summary of the Invention]

### [Problem to be Solved by the Invention]

Many devices and members exist below the driver's seat on a tractor, so if a control unit is disposed below the driver's seat, the aspect of maintenance of the control unit is disadvantaged. As disclosed in patent document 1, if a cabin for covering the driving unit is disposed, the driving unit is arranged in the cabin, and the control unit is also arranged in the cabin, so the aspect of maintenance of the control unit is even further disadvantaged.

An object of the present invention is to improve maintenance of the control unit when a control unit is disposed on the tractor.

### [Means for Solving the Problem]

The present invention is defined by the independent claim 1. Preferred embodiments are defined in the dependent claims. In particular, there is provided a tractor comprising
a support member disposed in a rear portion of a machine body, for supporting a lower portion of a driver's seat;
left and right rear-wheel fenders disposed at left and right lateral side portions of the support member; and
a control unit supported between the left and right fenders, and at a lower side of a rear portion of a rear side of the driver's seat in the support member.

The support member disposed in a rear portion of a machine frame, for supporting a lower portion of a driver's seat in the tractor is positioned at a rear portion of the driving unit. The lower side of the rear portion of the rear side of the driver's seat in the support member is a region that corresponds to an outside of the driving unit, and is open to the rear side. Left and right rear-wheel fenders exist at left and right lateral sides of this region.

According to the present invention, it is possible to arrange a control unit in a region opened to the rear side avoiding a lower side of the driver's seat where multiple devices and members exist, by support the control unit at the lower side at a rear portion of the support member, thereby making it possible to conduct maintenance on the control unit from the rear side without difficulty. The lower side of the rear portion of the support member is a region that corresponds to the outside of the driving unit. Even if the cabin that covers the driver's seat is disposed, the control unit is arranged at the outside of the cabin.

As described above, according to the present invention, it is possible to improve the maintenance of the control unit in light of the point that it is possible to implement maintenance work on the control unit from the rear side without difficulty, and the point that even if the cabin that covers the driver's seat is disposed, the control unit is arranged at the outside of the cabin.

According to the present invention, the control unit is supported between the left and right fenders and at the lower side of the rear portion of the support member so the upper, left and right sides of the control unit are surrounded and protected. This is advantageous in the aspect of preventing damage to the control unit.

In the present invention, it is preferred that a vertical face portion along left and right directions, and a lateral face portion along left and right directions are disposed in the rear portion of the support member, and has a shape rising rearwards when seen in side view; and the control unit is supported at the lower side of the lateral face portion, at a rear side of the vertical face portion.

According to the present invention, it is possible to attain a state where the control unit faces the rear side when the control unit is supported at the lower side of the rear portion of the support member, by making the rear portion of the support member have a rising shape, so it is possible to conduct maintenance on the control unit from the rear side without difficulty.

According to the present invention, when the rear portion of the support member has a rising shape, dispose the rear portion of the support member, a vertical face portion along left and right directions, and a lateral face portion along left and right directions. With this, it is possible easily to attain a state where the control unit faces the rear side by mounting a boxshaped control unit, for example, to the vertical face portion and the horizontal face portion of the rear portion of the support member.

In the present invention, it is preferred that a lifter arm that freely swings up and down is disposed at the lower side of the rear portion of the support member, and the control unit is supported between the left or right fender and the lifter arm when seen in the plan view.

With the tractor, often times the lifter arm that freely swings up and down is disposed at the lower side of the rear portion of the support member. With this, the control unit is supported between the left or right fender and the lifter arm thereby making it possible to arrange the control unit while avoiding the up and down rocking trajectory of the lifter arm without difficulty.

In the present invention, it is preferred that the control unit is supported by the machine body via a vibration-insulation member.

According to the present invention, the support member is supported by the machine body via the vibration-insulation member. It is difficult for vibrations to be transmitted to the control unit so this is advantageous in the aspect of preventing damage to the control unit.

In the present invention, it is preferred that a cover that covers the rear side of the control unit is disposed.

According to the present invention, the upper, left, and right sides of the control unit are protected by the left and right fenders and the rear portion of the support member, and the rear side of the control unit is protected by the cover, so this is advantageous in the aspect of preventing damage to the control unit.

In the present invention, it is preferred that a connector is disposed facing downward at a lower portion of the control unit, and a portion opposing the connector in the cover is open.

When the connector facing downward of the control unit is disposed, according to the present invention, the portion opposing the connector in the control unit is open in the cover that covers the rear side of the control unit, so it is possible to arrange a harness that is connected to the control unit connector without difficulty.

In the present invention, it is preferred that a base of ROPS frame is connected to the rear portion of the machine body, the ROPS frame extending to an upper side; and the base is arranged at the rear side of the control unit.

There are tractors, wherein the base of the POPS frame is connected to the rear portion of the machine body, and the POPS frame extends to anupper side. According to the present invention, the base of the POPS frame is arranged at the rear side of the control unit, and the rear side of the control unit is protected by the base of the POPS frame, so this is advantageous in the aspect of preventing damage to the control unit.

In the present invention, it is preferred that a frame along the left and right directions is connected across the left and right base portions, to be positioned at the upper side of the control unit when viewed from the back side.

There are tractors, wherein when the POPS frame is connected to the rear portion of the machine body, the frame is connected across the left and right base portions of the POPS frame, to reinforce the ROPS frame.

According to the present invention, the frame connected across the left and right base portions of the POPS frame is arranged at the upper side of the rear side of the control unit; the uppers side of the rear side of the control unit is protected by the frame, so this is advantageous in the aspect of preventing damage to the control unit.

in the present invention, it is preferred that a tool box is supported on the frame to be positioned at an upper side of the frame.

When the tool box is disposed in the tractor, the frame can be dually used for the tool box support member by supporting the tool box on the frame connected across the left and right base portions of the POPS frame. This is advantageous in the aspect of simplifying the structure.

### [Brief Description of the Drawings]

Fig. 1 is an overall side view of a tractor;
Fig. 2 is an overall plan view of the tractor;
Fig. 3 is a longitudinal side view near a driving unit;
Fig. 4 is a back view of the tractor;
Fig. 5 is an exploded perspective view near a control unit;
Fig. 6 is an overall side view of the tractor, in a first alternative embodiment of the present invention;
Fig. 7 is a back view of the tractor, in the first alternative embodiment of the present invention;
Fig. 8 is an overall side view of the tractor, in a second alternative embodiment of the present invention; and
Fig. 9 is a back view of the tractor, in the second alternative embodiment of the present invention.

### [Description of the Preferred Embodiments]

The front and rear directions, and the left and right directions in this embodiment of the present invention indicated as follows, unless otherwise specified, F denotes the "front direction;" B denotes the "back direction;" U denotes the "upward direction" and D denotes the "downward direction." R denotes the "right direction," and L denotes the "left direction."

### (Overall Tractor Constitution)

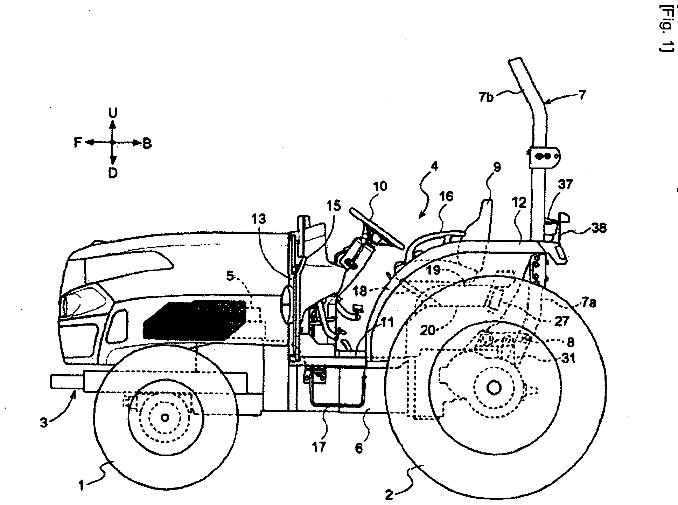

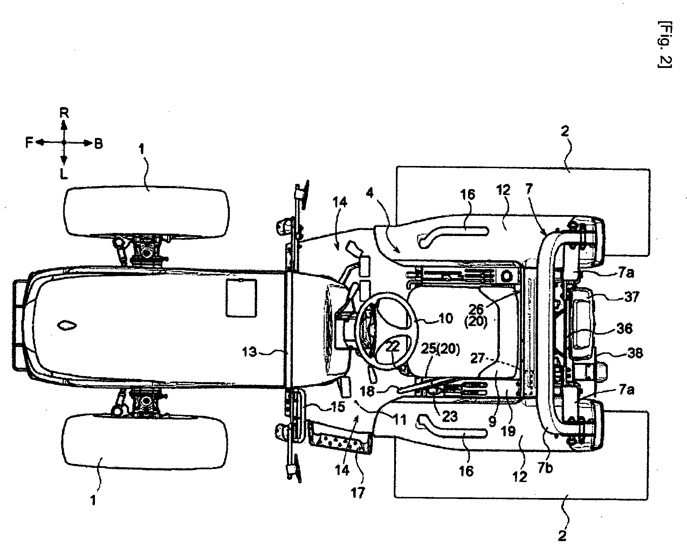

As shown in Figs. 1, and 2, disposed are left and right front wheels 1, and left and right rear wheels 2, and a machine body 3 supported by the front wheels 1 and the rear wheels 2, and the driving unit 4 is supported by the machine body 3. The main body 3 is equipped with an engine 5 at the front side, and transmission case 6 at the rear side. The engine 5 and transmission case 6 are linked.

The ROPS frame is linked to the rear portion of the transmission case 6 and extends to the upward side. The ROPS frame 7 is arranged at a rear side of the driving unit 4.

The left and lifter arms 8, and left and right lift cylinders 31 that rockingly drive the lifter arms are disposed behind the transmission case 6. Each type of work device (not shown in the drawings) can be linked to the rear of the transmission case 6. The work devices can be raised and lowered by the lifter arms 8.

### (Constitution of the Driving Unit)

As shown in Figs. 1, and 2, the driving unit 4 is equipped with a driver's seat 9, a steering wheel 10 for steering the front wheels 1, and a floor 11 arranged below the driving unit 4. The driving unit 4 is arranged behind the engine 5, and arranged above the transmission case 6.

Fenders 12 are disposed at the left and right rear wheels 2. The left and right fenders 12 are arranged at left and right horizontal sides of the driver's seat 9. A partitioning wall 13 is arranged between the driving unit 4, and the engine 5. The steering wheel 10 is arranged behind the partitioning wall 13.

The space between the partitioning wall 13 and the right fender 12 is an egress-ingress area 14 at a right side of the driving unit 4. The space between the partitioning wall 13 and the left fender 12 is an egress-ingress area 14 at a left side of the driving unit 4. The driver egresses and ingresses the driving unit 4 mainly through the egress-ingress area 14 on the left side.

A railing frame 15 is arranged in front of the left-side egress-ingress area 14 in the egress-ingress area 14. Handles 16 are linked above the left and right fenders 12. Step 17 is linked to the left side of the floor 11, and step 17 is arranged below the egress-ingress area 14.

With the structure described above, the driver will grab the railing frame 15 with their left hand, and grab the handle 16 on the left and right fenders 12, at the left side egress-ingress area 14, place their foot on the step 17 and egress-ingress to the driving unit 4.

### (Constitution Near the Driver's Seat in the Driving Unit)

As depicted in Figs. 1, 2 and 3, a support member 20 is disposed behind the machine body 3, and a lower portion of the driver's seat 9 (a seat) is supported by the support member 20.

A lever guide 19 is disposed at a left, top side of the support member 20 and between the driver's seat 9 and left fender 12. A parking brake lever 18, operation handle 22 and a gear shifting lever 23 are arranged on the lever guide 19.

The parking brake lever 18 can implement operations to release and engage the brake of the parking brake (not shown in the drawings) disposed in the transmission case 6.

The operation lever 22 can block the transmission of motive power to the front wheels 1 and set to a two-wheel drive state in which only the rear wheels 2 are driven, or to a four-wheel drive state in which the front wheels 1 and the rear wheels 2 are driven.

A gear shifter (not shown in the drawings) for travel is disposed in the transmission case 6. The gear shifter for travel can be operated for 3 gears for forward and 1 gear for reverse. The gear shifting lever 23 can operate the gear shifter for travel.

### (Constitution of the Support Member that Supports the Driver's Seat)

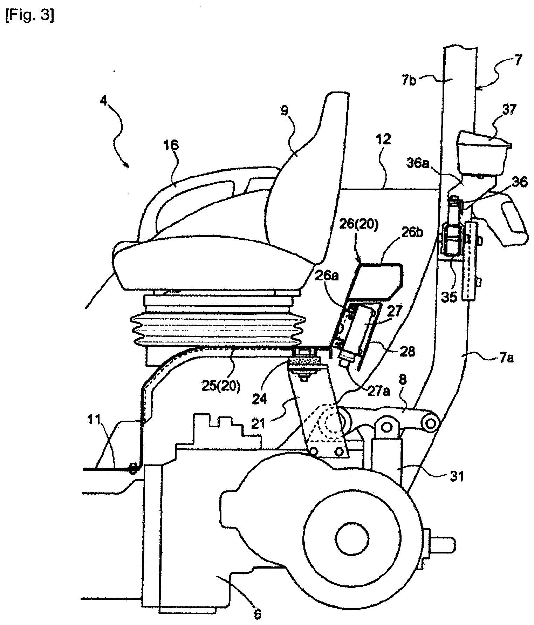

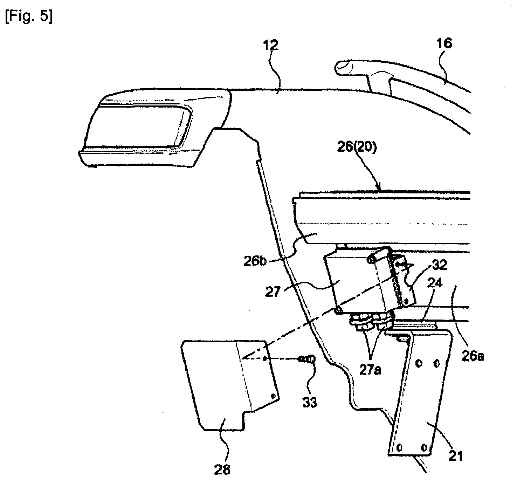

As depicted in Figs. 3, 4 and 5, the support member 20 is equipped with a front portion 25 and a rear portion 26. The front portion 25 and the rear portion 26 of the support member 20 span the left and right fenders 12. With this, the left and right left and right rear-wheel fenders 12 disposed at the left and right lateral side portions for the front portion 25 and the rear portion 26 of the support member 20.

A bracket 21 is linked to the left and right portions behind the transmission case 6. The front portion 25 of the support member 20 is arranged facing laterally; the support member 20 is supported by the machine body 3 via a vibration-insulation member 24 and the bracket 21 A bottom (a seat) of the driver's seat 9 is supported by the front portion 25 of the support member 20; the rear portion 26 of the support member 20 is a portion of the rear side of the driver's seat 9.

The rear portion 26 of the support member 20 is equipped with a vertical face portion 26a along left and right directions connected to a rear-end portion of the front portion 25 of the support member 20, and a lateral face portion 26b along left and right directions connected to a top portion of the vertical face portion 26a. With this, the rear portion 26 of the support member 20 has a step-shaped rear rising shape when seen in side view.

### (Arrangement of the Control Unit)

As shown in Figs. 3, 4, and 5, the control unit 27 is supported between the left and right fenders 12 and at the lower side of the portion of the rear portion 26 of the support member 20, and arranged at a rear side of the lever guide 19.

Specifically, at the rear portion 26 of the support member 20, a bracket 32 is linked to a rear face of the left portion of the vertical face portion 26a, and the control unit 27 is mounted to the bracket 32. With this, the control unit 27 is arranged at a lower side of the lateral face portion 26b at the rear portion 26 of the support member 20.

In such a case, it is acceptable to link the bracket 32 to a lower face of the left portion of the lateral face portion 26b, in the rear portion 26 of the support member 20, and to mouth the control unit 27 to the bracket 32. With this, the control unit 27 is arranged at a rear side of the vertical face portion 26a at the rear portion 26 of the support member 20.

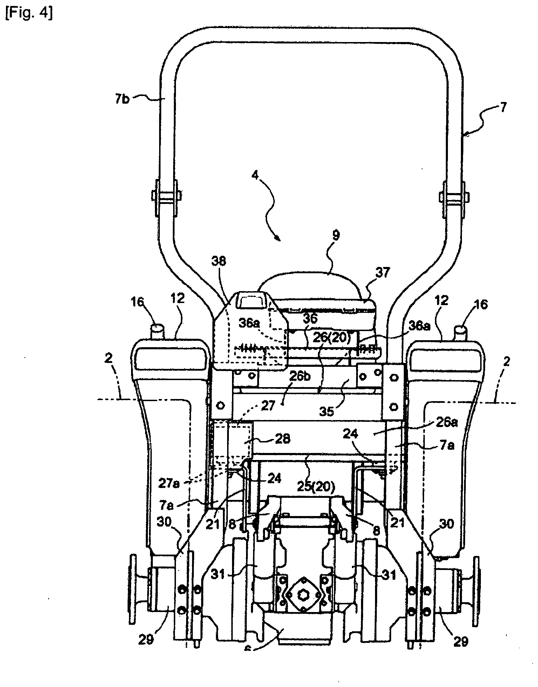

Left and right lifter arms 8 are arranged at a lower side of the rear portion 26 of the support member 20. The control unit 27 is supported to touch the left fender 12. With this, the control unit 27 is in a state supported between the left fender 12 and the left lifter arm 8 when seen in the plan view. In Fig. 4, when the lifter arm 8 rises up to its upper limit position, the control unit 27 is supported between the fender 12 and the left lifter arm 8 when seen from the back side.

In such a case, it is acceptable to support the control unit 27 to touch the right fender, and so that the control unit 27 is supported between the right fender 12 and the right lifter arm 8 when seen in the plan view.

A cover 28 is mounted to the bracket 32 by a bolt 33 at the ear portion 26 of the support member 20. A rear side of the control unit 27 is covered by the cover 28. The cover 28 can be removed by removing the bolt 33.

A connector 27a of the control unit 27 is disposed facing downward at a lower portion of the control unit 27. A portion of a lower side opposing the connector 27a of the control unit 27 is open, in the cover 28. A connector 27a of the control unit 27 is arranged in the portion open at a lower side of the cover 28.

### (Constitution of the ROPS Frame)

As shown in Figs. 3 and 4, the ROPS frame is equipped with left and right base portions 7a, and a loop-shaped top portion 7b.

Left and right rear wheel axle cases 29 are linked to the rear of the transmission case 6. The rear wheels 2 are supported by the rear wheel axle case 29. A bracket 30 is linked to the rear wheel axle case 29. The base portion 7a of the POPS frame is linked to the bracket 30, and the ROPS frame 7 extends to a top side. The base portion 7a of the POPS frame 7 is arranged along up and down directions at the rear side of the control unit 27 and cover 28.

A frame 35 is linked across a top portion of the left and right base portions 7a of the POPS frame 7. A lateral-facing frame 36 is linked to an upper portion of the frame 35, and a tool box 37 is linked to left and right upward facing brackets 36a of the frame 36. A support plate 38 for mounting a license plate (not shown in the drawings) is connected to a left portion of the frame 36.

A frame 35 connected across a top portion of the left and right base portions 7a of the POPS frame 7 is arranged at an upper side at a rear side of the control unit 27 and cover 28.

The frames 35, and 36, the tool box 37, and the support plate 38 are arranged further at the upper side than the horizontal face portion 26b at the rear portion 26 of the support member 20 when seen from the back side. With this, a worker standing at the rear side of the transmission case 6 cannot work using the frames 35 and 36, the tool box 37, and support plate 38 even if they extend their hand to the driving unit 4.

### [First Embodiment of the Invention]

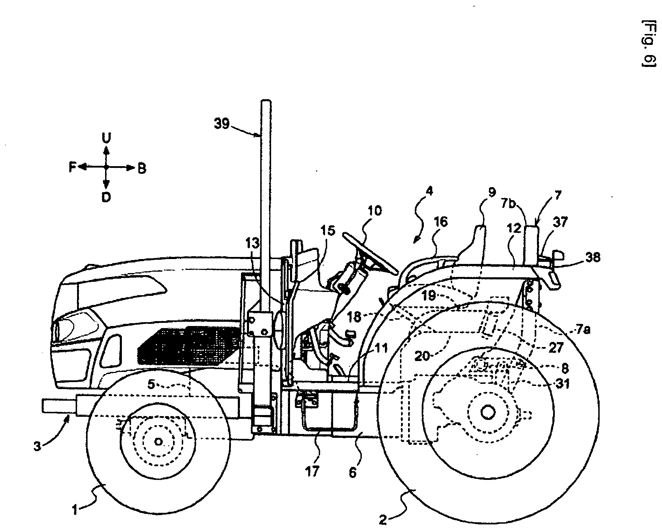

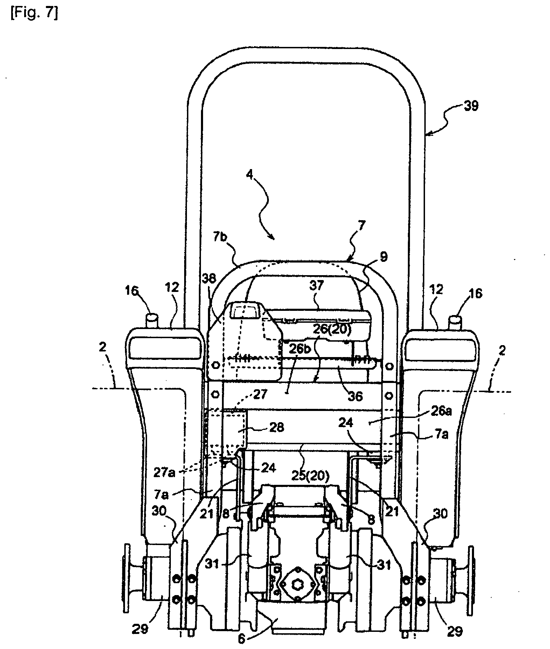

As shown in Figs. 6 and 7, the ROPS frame 7 is constituted to be low, so that the upper portion 7b of the ROPS frame 7 is arranged at a position that is substantially the same height as the upper end portion of the backrest of the driver's seat 9. The frame 35 shown in Figs. 3 and 4 is removed, and the frame 36 linked with the tool box 37 is connected across the left and right base portions 7a of the ROPS frame 7. In such a case, a high-back ROPS frame 39 is disposed at a front portion of the driving unit 4. The ROPS frame 39 extends to an upper side along the left and right sides of the partitioning wall 13.

### [Second Embodiment of the Invention]

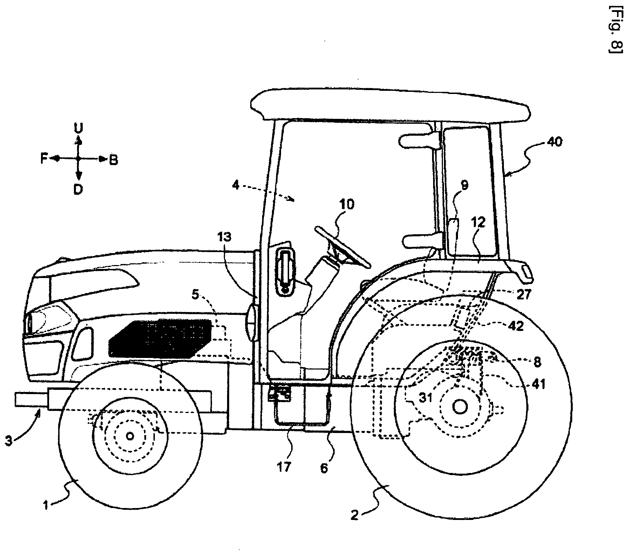

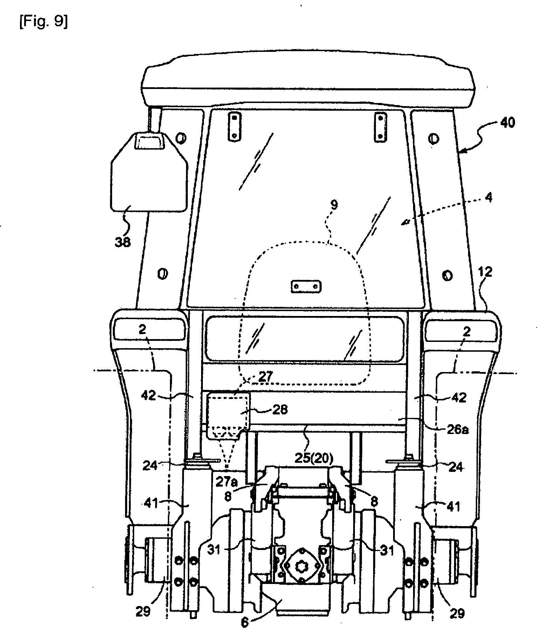

With the tractor depicted in Figs. 8 and 9, the cabin 40 is disposed that covers the driving unit 4. In such a case, as shown in Figs. 2, 3 and 4, the support member 20 is connected to the cabin 40.

A bracket 41 is connected to left and right rear wheel axle cases 29. Left and right support frames 42 extend facing downward at a rear portion of the cabin 40. A lower portion of the support frame 42 is supported by the bracket 41 via the vibration-insulation member 24.

With this, the support member 20 that supports the control unit 27 is supported by the machine body 3 by the vibration-insulation member 24 via the cabin 40. The control unit 27 is arranged at an outside of the cabin 40.

The support frame 42 is arranged in up and down directions to touch the fenders 12. With this, the control unit 27 is supported at a lower side on the left portion of the rear portion 26 of the support member 20, and between the left and right support frames 42 when seen from the back side.

### [Third Embodiment of the Invention]

It is acceptable to support the control unit 27 between the left and right fenders 12 and at a lower side at a right portion of the rear portion 26 of the support member 20.

It is acceptable to form the rear portion 26 of the support member 20 to be plate shaped with a rising rear shape, by removing the vertical face portion 26a and the lateral face portion 26b of the rear portion 26 of the support member 20. it is also acceptable to form the rear portion 26 of the support member 20 to be plate shaped along a horizontal face, and not to have a rising rear shape.

### [Industrial Applicability]

The present invention can be applied to a tractor.

### [Explanation of Letters or Numerals]

- 2: Rear wheel
- 3: Machine body
- 7: ROPS frame
- 7a: Base portion of ROPS frame
- 8: Lifter arm
- 9: Driver's seat
- 12: Fender
- 20: Support member
- 24: Vibration-insulation member
- 26: Rear portion of support member
- 26a: Vertical face portion of rear portion of support member
- 26b: Lateral face portion of rear portion of support member
- 27: Control unit
- 27a: Control unit connector
- 28: Cover
- 35, 36: Frame
- 37: Tool box

## Claims

1. A tractor comprising:
a support member (20) disposed in a rear portion of a machine body (3), for supporting a lower portion of a driver's seat (9);
left and right rear-wheel fenders (12) disposed at left and right lateral side portions of the support member (20); and
a control unit (27) supported between the left and right fenders (12), and at a lower side of a rear portion of a rear side of the driver's seat (9) in the support member (20);
**characterized in that**
a cover (28) that covers the rear side of the control unit (27) is disposed, and
a connector is disposed facing downward at a lower portion of the control unit (27) and a portion opposing the connector in the cover (28) is open.

2. The tractor according to claim 1, wherein the rear portion of the support member (20) is disposed with a vertical face portion along left and right directions, and a lateral face portion along left and right directions, and has a shape rising rearwards when seen in side view; and the control unit (27) is supported at a lower side of the lateral face portion, at a rear side of the vertical face portion.

3. The tractor according to claim 1 or claim 2, wherein a lifter arm (8) that freely swings up and down is disposed at the lower side of the rear portion of the support member (20), and the control unit (27) is supported between the left or right fender (12) and the lifter arm (8) when seen in the plan view.

4. The tractor according to any one of claims 1 to claim 3, wherein the control unit (27) is supported by the machine body (3) via a vibration-insulation member (24).

5. The tractor according to any one of claim 1 to claim 4, wherein a base of a ROPS frame (7a) is connected to the rear portion of the machine body (3), the ROPS frame (7) extending to an upper side; and the base portion is arranged at a rear side of the control unit (27).

6. The tractor according to claim 5, wherein the base portion comprises a left and right base portion and wherein a frame (35, 36) along the left and right directions is connected across the left and right base portions, such that the frame (35, 36) is positioned at an upper side of the control unit (27) when viewed from the back side.

7. The tractor according to claim 6, wherein a tool box (37) is supported on the frame (35, 36) such that the tool box (37) is positioned at an upper side of the frame (35, 36).

## Patentansprüche

1. Traktor, aufweisend:
ein Stützelement (20), das in einem hinteren Abschnitt eines Maschinenkörpers (3) angeordnet ist, um einen unteren Abschnitt eines Fahrersitzes (9) zu lagern;
linke und rechte Hinterrad-Fender (12), die an linken und rechten lateralen Seitenabschnitten des Stützelements (20) angeordnet sind; und
eine Steuerungseinheit (27), die zwischen dem linken und rechten Fender (12) und an einer unteren Seite eines hinteren Abschnitts einer Rückseite des Fahrersitzes (9) in dem Stützelement (20) gelagert ist;
**dadurch gekennzeichnet, dass**
eine Abdeckung (28) angeordnet ist, die die Rückseite der Steuerungseinheit (27) bedeckt, und
ein Verbinder nach unten weisend an einem unteren Abschnitt der Steuerungseinheit (27) angeordnet ist und ein dem Verbinder in der Abdeckung (28) gegenüberliegender Abschnitt offen ist.

2. Traktor nach Anspruch 1, wobei der hintere Abschnitt des Stützelements (20) mit einem vertikalen Flächenabschnitt entlang der linken und rechten Richtung, sowie einem seitlichen Flächenabschnitt entlang der linken und rechten Richtung angeordnet ist, und eine Form aufweist, die von der Seite gesehen nach hinten ansteigt;
und die Steuerungseinheit (27) an einer Unterseite des seitlichen Flächenabschnitts, an einer Rückseite des vertikalen Flächenabschnitts gelagert wird.

3. Traktor nach Anspruch 1 oder Anspruch 2, wobei an der Unterseite des hinteren Abschnitts des Stützelements (20) ein Hubarm (8), der frei nach oben und unten schwingt, angeordnet ist, und die Steuerungseinheit (27) in Draufsicht gesehen zwischen dem linken oder rechten Fender (12) und dem Hubarm (8) angeordnet ist.

4. Traktor nach einem der Ansprüche 1 bis 3, wobei die Steuerungseinheit (27) von dem Maschinenkörper (3) über ein Vibrationsisolationselement (24) gelagert wird.

5. Traktor nach einem von Anspruch 1 bis Anspruch 4, wobei eine Basis eines ROPS-Rahmens (7a) mit dem hinteren Abschnitt des Maschinenkörpers (3) verbunden ist, der RaPS-Rahmen (7) sich zu einer oberen Seite erstreckt; und der Basisabschnitt an einer Rückseite der Steuerungseinheit (27) angeordnet ist.

6. Traktor nach Anspruch 5, wobei der Basisabschnitt einen linken und rechten Basisabschnitt aufweist und wobei ein Rahmen (35, 36) entlang der linken und rechten Richtung über den linken und rechten Basisabschnitt verbunden ist, so dass der Rahmen (35, 36) von der Rückseite gesehen an einer Oberseite der Steuerungseinheit (27) angeordnet ist.

7. Traktor nach Anspruch 6, wobei an dem Rahmen (35, 36) ein Werkzeugkasten (37) gelagert ist, so dass der Werkzeugkasten (37) an einer oberen Seite des Rahmens (35, 36) positioniert ist.

## Revendications

1. Tracteur, comprenant :
un élément de support (20) disposé dans une partie arrière d'un corps de machine (3), destiné à supporter une partie inférieure d'un siège conducteur (9);
des garde-boue de roue arrière gauche et droite (12) disposés au niveau de parties latérales gauche et droite de l'élément de support (20) ; et
une unité de commande (27) supportée entre les garde-boue gauche et droit (12), et au niveau d'un côté inférieur d'une partie arrière d'un côté arrière du siège conducteur (9) dans l'élément de support (20) ;
**caractérisé en ce que**
un couvercle (28) qui recouvre le côté arrière de l'unité de commande (27) est disposé, et
un raccord est disposé dirigé vers le bas au niveau d'une partie inférieure de l'unité de commande (27) et une partie opposée au raccord dans le couvercle (28) est ouverte.

2. Tracteur selon la revendication 1, dans lequel la partie arrière de l'élément de support (20) est disposée avec une partie de face verticale le long de directions gauche et droite, et une partie de face latérale le long de directions gauche et droite, et présente une forme montant vers l'arrière vue dans une vue latérale ; et l'unité de commande (27) est supportée au niveau d'un côté inférieur de la partie de face latérale, et au niveau d'un côté arrière de la partie de face verticale.

3. Tracteur selon la revendication 1 ou la revendication 2, dans lequel un bras élévateur (8) qui oscille librement vers le haut et vers le bas est disposé au niveau du côté inférieur de la partie arrière de l'élément de support (20), et l'unité de commande (27) est supportée entre le garde-boue gauche ou droit (12) et le bras élévateur (8) vu dans la vue en plan.

4. Tracteur selon l'une quelconque des revendications 1 à 3, dans lequel l'unité de commande (27) est supportée par le corps de machine (3) par le biais d'un élément d'isolation des vibrations (24).

5. Tracteur selon l'une quelconque des revendications 1 à 4, dans lequel une base d'un cadre ROPS (7a) est reliée à la partie arrière du corps de machine (3), le cadre ROPS (7) s'étendant vers un côté supérieur ; et la partie de base est agencée au niveau d'un côté arrière de l'unité de commande (27).

6. Tracteur selon la revendication 5, dans lequel la partie de base comprend une partie de base gauche et droite et dans lequel un cadre (35, 36) le long des directions gauche et droite est relié d'un côté à l'autre des parties de base gauche et droite, de sorte que le cadre (35, 36) est positionné au niveau d'un côté supérieur de l'unité de commande (27) vu depuis le côté arrière.

7. Tracteur selon la revendication 6, dans lequel une boîte à outils (37) est supportée sur le cadre (35, 36) de sorte que la boîte à outils (37) est positionnée au niveau d'un côté supérieur du cadre (35, 36).
